# EUROPÄISCHE PATENTSCHRIFT

(11) **EP 1 389 361 B1**
(45) Veröffentlichungstag und Bekanntmachung des Hinweises auf die Patenterteilung: **22.09.2010**
(21) Anmeldenummer: 02730254.6
(22) Anmeldetag: 14.05.2002
(51) Int. Cl.: H02P 7/28

(54) **VERFAHREN ZUM KORRIGIEREN EINER DREHSTELLUNGSBESTIMMUNG EINER ANTRIEBSWELLE EINES KOMMUTIERTEN GLEICHSTROMMOTORS**
METHOD FOR CORRECTING THE DETERMINATION OF THE ROTATING POSITION OF A DRIVE SHAFT OF A COMMUTATED DIRECT CURRENT MOTOR
PROCEDE POUR CORRIGER UNE POSITION DE ROTATION DETERMINEE D'UN ARBRE DE TRANSMISSION D'UN MOTEUR A COURANT CONTINU COMMUTE

(30) Priorität: 21.05.2001 DE 10124615
(43) Veröffentlichungstag der Anmeldung: 18.02.2004
(73) Patentinhaber: Leopold Kostal GmbH & Co. KG, 58507 Lüdenscheid (DE)
(72) Erfinder: GERLACH, Tobias, 58119 Hagen (DE)
(86) Internationale Anmeldenummer: PCT/EP2002/005280
(87) Internationale Veröffentlichungsnummer: WO 2002/095924

(56) Entgegenhaltungen:
- EP-A- 0 730 156
- DE-A- 19 834 108
- DE-C- 19 729 238

## Beschreibung

Die Erfindung betrifft ein Verfahren zum Korrigieren einer Drehstellungsbestimmung einer Antriebswelle eines kommutierten Gleichstrommotors durch Auswerten der im Ankerstromsignal enthaltenen Stromrippel bei Auftreten von Fehlrippeln, wenn innerhalb eines einen definierten Zeitpunkt nach dem zuletzt detektierten Stromrippel umgebenden Toleranzbereiches kein weiterer Stromrippel erkannt wird.

Das Ankerstromsignal eines kommutierten Gleichstrommotors umfaßt einen Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker zehn Kollektorlamellen auf, sind im Ankerstromsignal entsprechend zehn Stromrippel zu erkennen. Eine Zählung der Stromrippel kann somit Aufschluß über die aktuelle Drehstellung des Ankers des Gleichstrommotors und somit bezüglich des angetriebenen Elements innerhalb seiner vorbestimmten Bewegungsstrecke geben. Zu diesem Zweck wird das analoge Ankerstromsignal digitalisiert, um eine entsprechende Zählung vornehmen zu können.

Bei einem Betrieb eines Gleichstrommotors, insbesondere unter Last kann es jedoch vorkommen, daß die im Ankerstromsignal enthaltenen Stromrippel verzerrt auftreten, wobei sich eine solche Verzerrung durch zwei Stromspitzen bemerkbar macht. Diese Stromspitzen werden als Doppelrippel bezeichnet. Im Zuge der Digitalisierung eines solchen Ankerstromsignales werden anstatt einer Stromspitze durch eine solche Verzerrung an dieser Position zwei Stromrippel als Stromrippelsignal aufgezeichnet. Eine Zählung dieser Doppelrippel führt jedoch zu einer fehlerhaften Positionsbestimmung des angetriebenen Elements. Entsprechendes gilt für das Ausbleiben eines als Fehlrippel bezeichneten Stromrippels bei tatsächlicher Drehbewegung der Ankerwelle. Diese Fehler sind durch den Kommutator bedingt und somit nicht ohne weiteres durch eine Aufbereitung des Ankerstromsignales eliminierbar.

Aus DE 197 29 238 C1 ist eine Maßnahme bekanntgeworden, gemäß der das Ausbleiben eines erwarteten Stromrippels im Zählergebnis nur dann korrigiert wird, wenn der erwartete Stromrippel nicht innerhalb eines den erwarteten Zeitpunkt umgebenden Toleranzbereiches erkannt wird. Der Toleranzbereich ist fest vorgegeben. Bei dem aus diesem Dokument bekannten Verfahren wird somit der berechnete Zeitpunkt des wahrscheinlich nächsten Kommutierungszeitpunktes (Stromrippel) um die Größe des vorgegebenen Toleranzbereiches erweitert. Auf diese Weise werden im oder vor dem berechneten Zeitpunkt nicht aufgetretene Stromrippel nur dann als Fehlrippel erkannt, wenn auch innerhalb des Toleranzbereiches ein Stromrippel nicht detektiert worden ist. Mit diesem Verfahren ist eine zufriedenstellende Rippeldetektion bei einem stationären oder quasi stationären Betrieb des Gleichstrommotors möglich, bei der auch Fehl- oder Doppelrippel entsprechend korrigiert werden. Wird ein Stromrippel erst zeitlich nach der oberen Grenze des Toleranzbereiches detektiert, wird systemsseitig auf ein fehlerhaftes Ausbleiben eines Stromrippels geschlossen und entsprechend das Zählergebnis korrigiert. Bei einem Betrieb eines Gleichstromelektromotors können jedoch Betriebszustände eintreten, bei denen die Periodendauer eines Stromrippels sich quasi sprunghaft vergrößert. Ein solcher Betriebszustand tritt beispielsweise bei einem sprungartig gestiegenem Lastmoment auf, beispielsweise bei einem Betrieb des Elektromotors gegen einen Anschlag. Da bei einer solchen Situation der Stromrippel erst nach Ablauf des Toleranzbereiches detektiert wird, wird systemseitig fälschlicherweise eine Korrektur des Zählergebnisses durchgeführt. Folglich ist die Positionsbestimmung der Ankerwelle verfälscht. Bei einer Wiederholung derartiger Ereignisse, verfälscht sich das Zielergebnis zunehmend.

Aus DE 198 34 108 A1 ist ein Verfahren zur Bestimmung der Anzahl von Motorumdrehungen bei Elektromotoren aus Stromrippeln bekannt. Bei diesem Verfahren wird ein zeitliches Intervall bestimmt, innerhalb dessen der nächste Rippel erkannt werden soll. Die Länge dieses zu untersuchenden zeitlichen Intervalls wird dabei in Abhängigkeit von vorhergehenden, erkannten Rippeln bestimmt, z.B. indem der zeitliche Abstand der beiden zuletzt erkannten Rippel in die Berechnung des Intervalls mit eingeht. Beim Ausfall eines Rippels wird dadurch die Berechnung eines folgenden Intervalls aufgrund des fehlenden zeitlichen Abstands aber nicht mehr möglich bzw. wird mit zunehmender Anzahl von folgenden Fehlrippeln immer unpräziser, wenn dadurch auf den zeitlichen Abstand weiter vorhergehender Rippel zurückgegriffen werden muss.

Ausgehend von diesem diskutierten Stand der Technik liegt der Erfindung daher die Aufgabe zugrunde, ein eingangs genanntes gattungsgemäßes Verfahren dergestalt weiterzubilden, daß die zum vorbekannten Stand der Technik gezeigte Fehlinterpretation von Fehlrippeln vermieden, zumindest jedoch weitestgehend reduziert ist.

Diese Aufgabe wird erfindungsgemäß dadurch gelöst, daß die Größe des den Zeitpunkt einer erwarteten Stromrippeldetektion umgebenden Toleranzbereiches, in dem ein Korrektur des Zählergebnisses nicht erforderlich ist, dynamisch an sich ändernde Betriebszustände des Gleichstrommotors angepaßt wird.

Bei dem erfindungsgemäßen Verfahren wird im Gegensatz zum vorbekannten Stand der Technik kein statischer Toleranzbereich vorgegeben, sondern dieser wird angepaßt an den jeweiligen Betriebszustand des Gleichstrommotors und wird entsprechend sich ändernden Betriebszuständen an diese angepaßt. Wirkt beispielsweise ein solcher Gleichstrommotor nach einem kontinuierlichen Betrieb, bei dem der Toleranzbereich an diesen Betrieb angepaßt wird und sich bei diesem Betrieb nicht oder nur kaum ändert, gegen einen Anschlag, durch den sich das Lastmoment sprunghaft erhöht, erfolgt eine Anpassung an diesen sich ändernden Betriebszustand dergestalt, daß der Toleranzbereich an diesen Betriebszustand angepaßt wird, wobei in dem beschriebenen Beispiel dieser vergrößert wird. Durch die Vergrößerung des Toleranzbereiches wird dann die infolge des geänderten Betriebszustandes entsprechend dem beschriebenen Beispiel verlängerte Periode des Stromrippels noch innerhalb des angepaßten Toleranzbereiches detektiert. Folglich entspricht das Zählergebnis der Anzahl der tatsächlich detektierten Stromrippel, so daß auch bei einem sich ändernden Betriebszustand - wie beschrieben - die gewünschte Positionsbestimmung der Ankerwelle exakt verbleibt.

Der Toleranzbereich, in dem eine Stromrippeldetektion erwartet wird, kann in Abhängigkeit von dem sich ändernden Betriebszuständen des Gleichstrommotors sowohl vergrößert als auch verkleinert werden.

Gemäß einer Ausgestaltung der Erfindung ist vorgesehen, daß der Toleranzbereich in Abhängigkeit von dem Maß einer Änderung des Mittelwertes des digitalisierten Ankerstromsignals eingestellt wird. Dabei ist vorgesehen, daß der Toleranzbereich bei steigendem Mittelwert vergrößert und bei fallendem Mittelwert verkleinert wird. Bei der Anpassung des Toleranzbereiches entsprechend diesem Ausführungsbeispiel wird dieser in Abhängigkeit von den vom aktuellen Zeitpunkt zurückliegenden Betriebszuständen angepaßt. Dabei kann vorgesehen sein, daß Mittelwertsänderungen in Änderungsintervalle unterteilt sind, so daß dann eine Anpassung der Größe des Toleranzbereiches schrittweise erfolgt. Für die Bestimmung des Mittelwertes ist es ausreichend, wenn ein bestimmtes, vom aktuellen Zeitpunkt zurückreichendes Zeitintervall betrachtet wird. Die Bemessung des Zeitintervalles kann konstant vorgegeben sein, oder auch zur Minimierung des Rechenaufwandes an den Betriebszustand des Gleichstrommotors adaptiv ausgelegt sein.

Gemäß einer weiteren Ausgestaltung der Erfindung kann eine Anpassung des Toleranzbereiches in Abhängigkeit von dem Maß einer Änderung der aus Motorstrom- und Motorkenndaten berechneten Motordrehzahl erfolgen. Bei diesem Ausführungsbeispiel wird der Toleranzbereich vergrößert, wenn eine negative Drehzahländerung berechnet worden ist. Umgekehrt kann der Toleranzbereich verkleinert werden, wenn eine positive Drehzahländerung errechnet worden ist. Der Einsatz dieses Verfahrens eignet sich insbesondere bei Betriebszuständen, bei denen das Lastmoment sprunghaft ansteigt. Zweckmäßig ist es, wenn die Bestimmung einer negativen Drehzahländerung in einem Zeitpunkt über die Berechnung des Drehzahlsprungantwortverlaufs durchgeführt wird, der einen sprunghaften Anstieg des aktuellen Lastmoments auf das Kurzschlußmoment zugrunde legt. Daraus läßt sich ableiten, wie lange eine Drehzahländerung noch erfolgen wird, bzw. wie lange die Ankerwelle sich noch drehen wird. Bei einem sprunghaft steigenden Lastmoment, wie beispielsweise bei einem Betrieb des Gleichstrommotors gegen einen Anschlag, wird sodann der Toleranzbereich entsprechend vergrößert, so daß auch der bezüglich seiner Periode verlängerte Stromrippel bei seiner Detektion innerhalb des Toleranzbereiches detektiert werden kann.

Der Berechnungszyklus kann maximal in jedem Abtastzyklus, mit dem das Ankerstromsignal digitalisiert wird, erfolgen. Dies ist jedoch grundsätzlich nicht notwendig; vielmehr wird es als ausreichend angesehen, daß eine Berechnung der negativen Drehzahländerung aus dem aktuellen Betriebszustand bei sprunghaft steigendem Lastmoment einmal innerhalb einer Stromrippelperiode durchgeführt und für die anderen Abtastzeitpunkte innerhalb dieser Stromrippelperiode extrapoliert wird.

Grundsätzlich ist es möglich, für unterschiedliche Betriebszustände des Gleichstrommotors unterschiedliche Korrekturverfahren zu betreiben und/oder die Berechnungen in Abhängigkeit von den Betriebszuständen bzw. von den sich ändernden Betriebszuständen häufiger oder weniger häufig durchzuführen. In diesem Zusammenhang ist es ebenfalls möglich, beispielsweise bei dem Verfahren entsprechend dem drehzahlbezogenen Ausführungsbeispiel in einer Anlaufphase des Gleichstrommotors das vollständige Motormodell mit den benötigten Motorstrom- und Motorkenndaten durchzuführen, an welche Anlaufphase sich eine Betriebsphase anschließt, in der zur Berechnung der maximalen Drehzahländerung bei sprunghaft steigendem Lastmoment lediglich eine Differenzbetrachtung der aktuellen Motorstromdaten zu vorangegangenen durchgeführt wird. Dies reduziert den Rechenaufwand.

Nachfolgend wird die Erfindung anhand von zwei Ausführungsbeispielen unter Bezugnahme auf die beigefügten Figuren beschrieben. Es zeigen:
- **Fig. 1a-d:**: Diagramme zur Darstellung der Anpassung des Toleranzbe- reiches zur Vermeidung einer Fehlinterpretation von Fehlrip- peln anhand einer Mittelwertbildung des Ankerstromsignales und
- **Fig. 2a-d:**: Diagramme zur Darstellung der Anpassung des Toleranzbe- reiches zur Vermeidung einer Fehlinterpretation von Fehlrip- peln anhand einer berechneten Drehzahländerung.

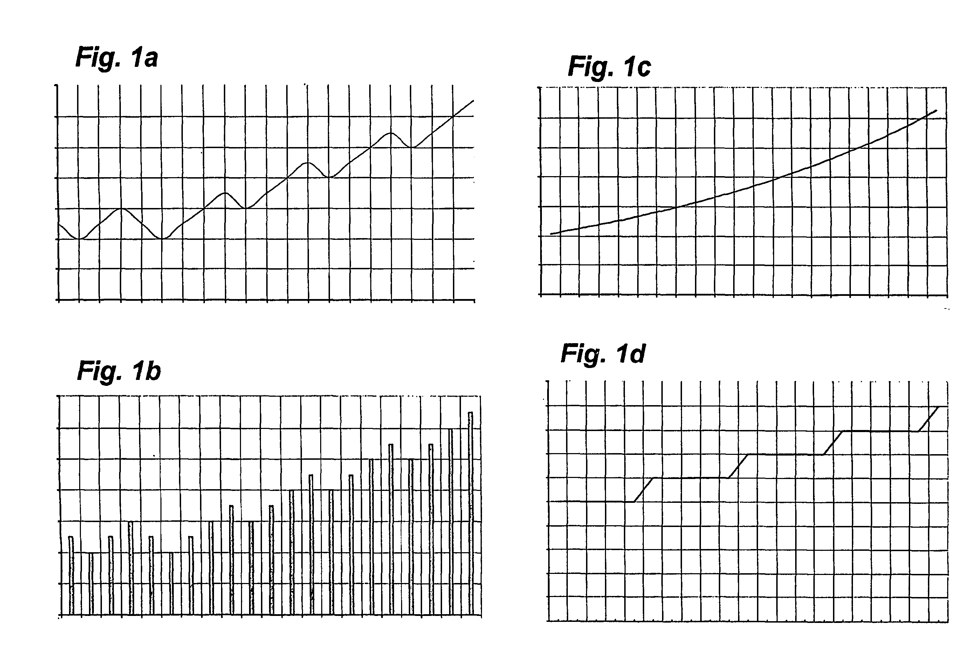

Figur 1 a zeigt in einem Diagramm, auf dem auf der y-Achse der Ankerstrom und auf der x-Achse die Zeit aufgetragen ist, den Verlauf eines analogen Ankerstromsignales. Zur Bestimmung des Verlaufes des Mittelwertes dieses Ankerstromsignales wird das in Figur 1a gezeigte analoge Ankerstromsignal zunächst entsprechend einem vorgegeben Takt abgetastet. Das digitalisierte Ankerstromsignal ist in Figur 1b wiedergegeben. Aus dem digitalisierten Ankerstromsignal wird in einem nächsten Schritt der Mittelwert gebildet, wobei zur Mittelwertbildung in einem Punkt jeweils eine bestimmte Anzahl von zeitlich zurückliegenden Werten des digitalisierten Ankerstromsignales verwendet werden. Der Verlauf des Mittelwertes des Ankerstroms ist in Figur 1 c gezeigt.

Schematisiert wiedergegeben ist in den Figuren 1a bis 1c ein Betriebszustand des kommutierten Gleichstrommotors, bei dem dieser gegen einen Anschlag wirkt. Handelt es sich bei diesem Gleichstrommotor beispielsweise um einen solchen, der als Fensterhebermotor in die Tür eines Kraftfahrzeuges eingesetzt ist, dann stellt sich dieser Betriebszustand etwa beim Schließen des Fensters ein, wenn der Gleichstrommotor das Fenster in den Rahmen fährt. Entsprechend stellt sich dieser Betriebszustand auch bei einer Einklemmsituation ein. Bei einem solchen Betriebszustand steigt das Ankerstromsignal durch den erhöhten Stromverbrauch an, welches ebenfalls in dem Anstieg des aus dem Ankerstromsignal abgeleiteten Mittelwertverlaufes entsprechend Figur 1c zum Ausdruck kommt. Eine Änderung des Mittelwertes des Ankerstromsignales reflektiert somit sich ändernde Betriebszustände des Gleichstrommotors, wie sich dies bei dem beispielhaft beschriebenen Betriebszustand durch den Anstieg des Mittelwertes des digitalisierten Ankerstromsignales bemerkbar macht. Daher kann der Verlauf des digitalisierten Mittelwertes des Ankerstromsignales eingesetzt werden, um in Abhängigkeit von der Änderung des Mittelwertes einen zur Vermeidung einer Fehlinterpretation von Fehlrippeln eingesetzten Toleranzbereich vorgeben zu können. Der Toleranzbereich, der dem vorausberechneten Zeitpunkt einer erwarteten Stromrippeldetektion zugeschlagen wird, kann auf diese Weise an sich ändernde Betriebszustände zur Vermeidung einer Fehlinterpretation von nicht detektierten Stromrippeln angepaßt werden. Bei dem dargestellten Betriebszustandsbeispiel wird dieser Toleranzbereich - wie in Figur 1d dargestelltebenfalls zunehmend vergrößert, wobei in dem gezeigten Ausführungsbeispiel der Toleranzbereich von einem Wert von 25 % bis auf einen Wert von 45 % infolge der eingetretenen Betriebszustandsänderung angehoben worden ist. Durch diesen vergrößerten Toleranzbereich ist nunmehr auch eine Stromrippeldetektion mit (sprunghaft) veränderter Periode bestimmungsgemäß möglich, auch wenn dieses erst später detektiert wird, als dies vorausberechnet war. Bei dem erfindungsgemäßen Verfahren erfolgt eine Korrektur des tatsächlich erfaßten Stromrippelzählergebnisses, wenn innerhalb des an den Betriebszustand angepaßten Toleranzwertes eine Stromrippeldetektion nicht erfolgt. Da die Einstellung des adaptiven Toleranzbereiches auch sich sprunghaft verändernde Stromrippelperioden berücksichtigt, ist bei Nichtdetektion eines Stromrippels innerhalb des Toleranzbereiches dann tatsächlich ein Stromrippel nicht erkannt worden, so daß die Korrektur des Zählergebnisses notwendig ist.

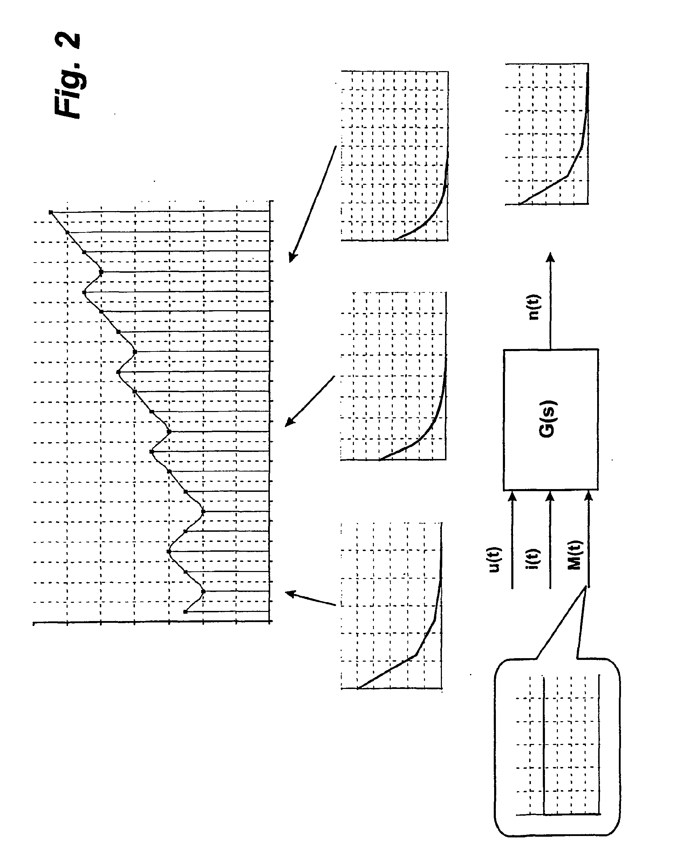

Figur 2 zeigt anhand entsprechender Diagramme ein weiteres Ausführungsbeispiel zur Anpassung des Toleranzbereiches bei der Stromrippeldetektion in Abhängigkeit von sich ändernden Betriebsbedingungen. Das in Figur 2 zuoberst abgebildete Diagramm entspricht demjenigen der Figuren 1a und 1 b des zuvor beschriebenen Ausführungsbeispieles, wobei die digital abgetasteten Werte des analogen Ankerstromsignales auf dieser Kurve mit kleinen Kästchen gekennzeichnet sind. Als Variable, anhand der der Toleranzbereich bei diesem Ausführungsbeispiel eingestellt wird, dient die aus Motorstrom- und Motorkenndaten errechnete maximale Drehzahländerung bei einem sprunghaften Anstieg des auf den Gleichstrommotor einwirkenden Lastmomentes, wie dies beispielsweise bei einem Einklemmfall bei Einsatz des Gleichstrommotors als Fensterhebermotor in einem Kraftfahrzeug der Fall sein kann. Da in diese Berechnung die aktuellen Motorstromdaten eingehen, ist in unterschiedlichen Zeitpunkten im Verlauf des Ankerstromsignals eine unterschiedliche maximale Drehzahländerung errechenbar. Beispielhaft ist in der unteren Reihe der Abbildungen der Figur 2 diese Berechnung dargestellt. Unter Berücksichtigung der Motorkenndaten, die als Übertragungsfunktion G(s) bezeichnet sind, werden aktuelle Motorstromdaten, hier: Spannung u(t), Strom i(t) und Lastmoment M(t) in die Berechnung der Drehzahländerung n(t) mit einbezogen. Das Ergebnis stellt dann die berechnete maximale Drehzahländerung dar, die in der unteren Zeile der Figur 2 als Diagramm wiedergegeben ist. Aus der Darstellung des in die Berechnung einfließenden Lastmomentes M(t) wird deutlich, daß bei der in dem Ausführungsbeispiel dargestellten Berechnung von einem sprungförmigen Anstieg des aktuellen Lastmomentes, der sich auf das maximale Kurzschlußmoment einstellen würde, ausgegangen wird. Selbstverständlich können an dieser Stelle auch andere lastmomentabhängige Modelle Eingang finden. Anhand des Kurvenverlaufes der berechneten maximalen Drehzahländerung wird dann der Toleranzbereich für die Stromrippeldetektion eingestellt. Bei einer sehr raschen negativen Drehzahländerung wird der Toleranzbereich entsprechend vergrößert.

In der mittleren Zeile der Diagramme der Figur 2 sind beispielhaft an den jeweiligen Minima des Ankerstromsignales die sich beim Durchführen einer solchen Berechnung ergebenden Drehzahländerungskurven wiedergeben. Die sich aus diesen Kurven abgeleitete Kurve des Verlaufes des Toleranzbereiches ist in Figur 2 nicht dargestellt. Der Verlauf des Toleranzbereiches entspricht jedoch im wesentlichen dem Verlauf des Toleranzbereiches der Figur 1d.

Bei diesem Verfahren kann eine Berechnung der maximalen Drehzahländerung in vorgegebenen Zeitpunkten erfolgen, wie dies bei dem in Figur 2 gezeigten Ausführungsbeispiel gezeigt ist, bei dem eine solche Berechnung bei jedem zweiten Minima durchgeführt wird. In Abhängigkeit davon, welche Rechenleistung zur Verfügung steht, kann diese Berechnung auch häufiger innerhalb des Verlaufes des Ankerstromsignales durchgeführt werden.

## Patentansprüche

1. Verfahren zum Korrigieren einer Drehstellungsbestimmung einer Antriebswelle eines kommutierten Gleichstrommotors durch Auswerten der im Ankerstromsignal enthaltenen Stromrippel bei Auftreten von Fehlrippeln, wenn innerhalb eines einen definierten Zeitpunkt nach dem zuletzt detektierten Stromrippel umgebenden Toleranzbereiches kein weiterer Stromrippel erkannt wird, **dadurch gekennzeichnet, daß** die Größe des den Zeitpunkt einer erwarteten Stromrippeldetektion umgebenden Toleranzbereiches, in dem ein Korrektur des Zählergebnisses nicht erforderlich ist, dynamisch an sich ändernde Betriebszustände des Gleichstrommotors angepaßt wird.

2. Verfahren nach Anspruch 1, **dadurch gekennzeichnet, daß** der Toleranzbereich in Abhängigkeit von dem Maß einer Änderung des Mittelwertes des Ankerstromsignals eingestellt wird, wobei der Toleranzbereich bei steigendem Mittelwert vergrößert und bei fallendem Mittelwert verkleinert wird.

3. Verfahren nach Anspruch 2, **dadurch gekennzeichnet, daß** in die Mittelwertbetrachtung des Ankerstromsignals ein vom aktuellen Zeitpunkt zurückreichendes Zeitintervall konstanter Größe eingeht.

4. Verfahren nach Anspruch 2, **dadurch gekennzeichnet, daß** in die Mittelwertbetrachtung des Ankerstromsignals ein vom aktuellen Zeitpunkt zurückreichendes Zeitintervall adaptiver Größe in Abhängigkeit von dem Betriebszustand des Gleichstrommotors eingeht.

5. Verfahren nach einem der Ansprüche 2 bis 4, **dadurch gekennzeichnet, daß** eine Anpassung der Größe des Toleranzbereiches schrittweise erfolgt.

6. Verfahren nach einem der Ansprüche 2 bis 5, **dadurch gekennzeichnet, daß** der Mittelwert aus dem digitalisierten Ankerstromsignal gebildet wird.

7. Verfahren nach Anspruch 1, **dadurch gekennzeichnet, daß** der Toleranzbereich in Abhängigkeit von dem Maß einer Änderung der aus Motorstrom- und Motorkenndaten berechneten Motordrehzahl erfolgt, wobei der Toleranzbereich bei negativer Drehzahländerung vergrößert und/oder bei positiver Drehzahländerung verkleinert wird.

8. Verfahren nach Anspruch 7, **dadurch gekennzeichnet, daß** zur Bestimmung des maximalen Toleranzbereiches in einem Zeitpunkt eine Bestimmung einer negativen Drehzahländerung über die Berechnung des Drehzahlsprungantwortverlaufs durchgeführt wird, der einen sprunghaften Anstieg des aktuellen Lastmomentes auf das maximale Kurzschlußmoment zugrunde legt.

9. Verfahren nach Anspruch 7, **dadurch gekennzeichnet, daß** die Berechnung der negativen Drehzahländerung mit jedem Abtastzyklus erfolgt, in dem das Ankerstromsignal digitalisiert wird.

10. Verfahren nach Anspruch 7, **dadurch gekennzeichnet, daß** die Berechnung der negativen Drehzahländerung einmal innerhalb einer Stromrippelperiode durchgeführt und für die anderen Abtastzeitpunkte innerhalb einer Stromrippelperiode extrapoliert wird.

11. Verfahren nach einem der Ansprüche 7 bis 9, **dadurch gekennzeichnet, daß** nach einer Anlaufphase, innerhalb der die Berechnung mit den benötigten Motorstrom- und Motorkenndaten durchgeführt wird, sich eine Betriebsphase anschließt, in der zur Berechnung der maximalen Drehzahländerung eine Differenzbetrachtung der aktuellen Motorstromdaten zu vorangegangenen durchgeführt wird.

12. Verfahren nach einem der Ansprüche 6 bis 10, **dadurch gekennzeichnet, daß** dieses Korrekturverfahren zur Korrektur der Stromrippelzählung lediglich innerhalb eines Zeitintervalls bei einem Motorstop oder einem Motorstart durchgeführt wird.

## Claims

1. Process for correcting a rotary position definition of a drive shaft of a commutated direct current motor by evaluating the current ripples contained in the armature current signal upon occurrence of ripple errors if no further current ripple is identified within a tolerance range encompassing a defined point of time after the last detected current ripple, **characterised in that** the magnitude of the tolerance range which encompasses the point of time of an anticipated current ripple detection and during which a correction of the counting result is not required is dynamically adapted to the changing operating states of the direct current motor.

2. Process in accordance with Claim 1, **characterised in that** the tolerance range is adjusted in dependence on the extent of a change of the mean value of the armature current signal, with the tolerance range increasing when the mean value rises and decreasing whenever the mean value becomes smaller.

3. Process in accordance with Claim 2, **characterised in that** a time interval having a constant magnitude and extending back from the current point of time has an influence on the consideration of the mean value of the armature current signal.

4. Process in accordance with Claim 2, **characterised in that** a time interval having an adaptive dimension in dependence on the operating state of the direct current motor and extending back from the current point of time has an influence on the consideration of the mean value of the armature current signal.

5. Process in accordance with any of Claims 2 to 4, **characterised in that** an adaptation of the magnitude of the tolerance range takes place successively.

6. Process in accordance with any of Claims 2 to 5, **characterised in that** the mean value is formed from the digitalised armature current signal.

7. Process in accordance with Claim 1, **characterised in that** the tolerance range occurs in dependence on the dimension of a change in the motor speed calculated from the motor current data and the motor characteristic data, with the tolerance range increasing if there is a negative change in the speed and/or decreasing if there is a positive change in the speed.

8. Process in accordance with Claim 7, **characterised in that**, in order to define the maximum tolerance range at any point of time, a definition of a negative change in speed is carried out over the calculation of the course of the speed step response for which a sudden rise in the current load torque to the maximum short-circuit torque is taken as the basis.

9. Process in accordance with Claim 7, **characterised in that** the calculation of the negative change in speed takes place upon each sampling cycle in which the armature current signal is digitalised.

10. Process in accordance with Claim 7, **characterised in that** the calculation of the negative change in speed is carried out once within a current ripple period and is extrapolated for the other sampling times within a current ripple period.

11. Process in accordance with any of Claims 7 to 9, **characterised in that**, subsequent to a start-up phase during which the calculation with the required motor current data and motor characteristic data is conducted, an operating phase follows during which a differential consideration of the current motor current data in comparison to previous data is carried out for the purpose of calculating the maximum change in speed.

12. Process in accordance with any of Claims 6 to 10, **characterised in that** this correction process for correcting the current ripple count is only carried out within a time interval during an engine stop or an engine start.

## Revendications

1. Procédé pour corriger, par l'évaluation des ondulations de courant contenues dans le signal de courant d'induit, une détermination de position angulaire d'un arbre de commande d'un moteur à courant continu commuté, lors de l'apparition d'ondulations incorrectes, quand aucune autre ondulation de courant n'est détectée à l'intérieur d'une plage de tolérance de part et d'autre d'un instant défini, après la dernière ondulation de courant détectée, **caractérisé en ce que** la grandeur de la plage de tolérance de part et d'autre du moment de détection d'une ondulation de courant attendue, dans laquelle une correction du résultat du compteur n'est pas nécessaire, est adaptée dynamiquement aux états de fonctionnement du moteur à courant continu se modifiant.

2. Procédé selon la revendication 1, **caractérisé en ce que** la plage de tolérance est réglée en fonction de la mesure d'une variation de la valeur moyenne du signal de courant d'induit, ladite plage de tolérance étant augmentée en cas de valeur moyenne croissante et étant réduite en cas de valeur moyenne décroissante.

3. Procédé selon la revendication 2, **caractérisé en ce qu'**un intervalle de temps de grandeur constante, remontant au moment actuel, est pris en compte dans la considération de la valeur moyenne du signal de courant d'induit.

4. Procédé selon la revendication 2, **caractérisé en ce qu'**un intervalle de temps de grandeur adaptive, remontant au moment actuel, est pris en compte dans la considération de la valeur moyenne du signal de courant d'induit, en fonction de l'état de fonctionnement du moteur à courant continu.

5. Procédé selon l'une des revendications 2 à 4, **caractérisé en ce qu'**une adaptation de la grandeur de la plage de tolérance est effectuée pas à pas.

6. Procédé selon l'une des revendications 2 à 5, **caractérisé en ce que** la valeur moyenne est formée à partir du signal de courant d'induit numérisé.

7. Procédé selon la revendication 1, **caractérisé en ce que** la plage de tolérance est fonction de la mesure d'une variation de la vitesse de rotation du moteur, qui est calculée à partir des données caractéristiques du courant du moteur et du moteur, la plage de tolérance étant augmentée en cas de variation négative de la vitesse de rotation et / ou réduite en cas de variation positive de la vitesse de rotation.

8. Procédé selon la revendication 7, **caractérisé en ce que**, pour la détermination de la plage de tolérance maximale à un moment, une détermination d'une variation négative de la vitesse de rotation est effectuée par le calcul de l'évolution de la réponse à un à-coup de la vitesse de rotation, basée sur une brusque augmentation du couple de charge jusqu'au couple de court-circuit maximal.

9. Procédé selon la revendication 7, **caractérisé en ce que** le calcul de la variation négative de la vitesse de rotation a lieu à chaque cycle d'échantillonnage, dans lequel le signal de courant d'induit est numérisé.

10. Procédé selon la revendication 7, **caractérisé en ce que** le calcul de la variation négative de la vitesse de rotation est effectué une fois au cours d'une période d'ondulation de courant et, pour les autres moments d'échantillonnage, est extrapolé dans une période d'ondulation de courant.

11. Procédé selon l'une des revendications 7 à 9, **caractérisé en ce qu'**une phase de démarrage, au cours de laquelle le calcul est effectué avec les données caractéristiques, nécessaires, du courant du moteur et du moteur, est suivie d'une phase de fonctionnement, au cours de laquelle une observation de la différence entre les données du courant de moteur actuelles et les précédentes, est effectuée pour le calcul de la variation maximale de la vitesse de rotation.

12. Procédé selon l'une des revendications 6 à 10, **caractérisé en ce que** ce procédé de correction du comptage des ondulations de courant est effectué seulement dans un intervalle de temps lors d'un arrêt du moteur ou d'un démarrage du moteur.
